(19) Europäisches Patentamt / European Patent Office / Office européen des brevets

(11) **EP 3 280 058 B1**

(12) **EUROPEAN PATENT SPECIFICATION**

(45) Date of publication and mention
of the grant of the patent:
**27.02.2019  Bulletin 2019/09**

(51) Int Cl.:
***H04B 3/56*** *(2006.01)*

(21) Application number: **17182245.5**

(22) Date of filing: **20.07.2017**

(54) **COUPLING CIRCUIT FOR POWER LINE SIGNALS TRANSMISSION**

KOPPLUNGSSCHALTUNG FÜR STROMLEITUNGSSIGNALÜBERTRAGUNG

CIRCUIT DE COUPLAGE POUR LA TRANSMISSION DE SIGNAUX DE LIGNE DE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.08.2016  IT 201600082884**

(43) Date of publication of application:
**07.02.2018  Bulletin 2018/06**

(73) Proprietor: **ECM S.p.A.**
**51034 Serravalle Pistoiese (Pistoia) (IT)**

(72) Inventor: **Santi, Alessandro**
**I-51034 Serravalle Pistoiese (PT) (IT)**

(74) Representative: **Carangelo, Pierluigi et al**
**Jacobacci & Partners S.p.A.**
**Via Tomacelli 146**
**00186 Roma (IT)**

(56) References cited:
**US-A- 4 473 817**

**Description**

TECHNOLOGICAL BACKGROUND OF THE INVENTION

Field of application

The present invention relates to the Power Line Communications or PLC field. In particular, the invention relates to a coupling circuit for power line communications between electrical devices connected to an electric network having three phase lines and one neutral line.

Prior art

Nowadays, devices configured to exchange data using the power supply network in accordance with Power Line Communication technology (or PLC) are increasingly popular and used.

Solutions are known which allow power line communications between electrical devices connected between a phase electric line and a neutral line of a household single-phase power supply network. In the case of a three-phase power supply network provided with a neutral line, the differential power line signals employed for communications between electrical devices connected to the network can generally be powered between one of the three phase lines and the neutral line. Thereby, it has been verified that only the devices connected between one of the aforesaid phases and the neutral line may benefit from a signal communication having an appropriate amplitude. Any other devices connectable to the three-phase network between two phase lines are only capable of receiving randomly generated spurious signals, starting from the aforesaid signals powered between one of the phase lines and the neutral line, following dissymmetry of the electrical system, for example produced through asymmetric capacitive coupling between phases. Such spurious signals have inadequate amplitude to give rise to a stable communication between electrical devices connected to the network, indispensable for many applications.

At present, in particular for railway industry applications, the need to establish stable power line communications between electrical devices regardless how such devices connect to the three-phase network is increasingly felt. An example of such devices are the heating elements or heating cables associated with railway switches employed to hinder snow accumulation and/or ice formation on the switches during the winter season. As known, incorrect activation of such heating elements may compromise the correct movement of the mechanical parts of the switches and their proper operation.

Document US 4473817 A describes a circuit for bi-directionally coupling a communication signal around a distribution transformer.

SUMMARY OF THE INVENTION

It is the object of the present invention to devise and provide a coupling circuit for power line communications between electrical devices connected to an electric network having three phase lines and one neutral line which allows to at least partially overcome the drawbacks complained above in relation to the known solutions, in particular by ensuring stable power line communications between different electrical devices even when these are connected between two phase lines of the three-phase network.

Such an object is achieved by means of a coupling circuit for power line communications between electrical devices connected to an electric network having three phase lines and one neutral line, in accordance with claim 1.

Preferred embodiments of such a coupling circuit are described in the dependent claims 2-10.

The present invention also relates to a system for the transmission/reception of power line signals on an electric network having three phase lines and one neutral line in accordance with claim 11.

BRIEF DESCRIPTION OF THE DRAWINGS

Further features and advantages of the coupling circuit according to the invention will become apparent from the following description of preferred embodiments, given by way of indicative and non-limiting example, with reference to the accompanying drawings, in which:

- **figure 1** shows a block diagram of a system for the transmission/reception of power line signals on a three-phase electric network comprising a first example of a coupling circuit in accordance with the present invention;
- **figures 2A-2D** show waveforms of differential signals applied to the coupling circuit included in the system in figure 1 as a function of time;
- **figure 3** shows a circuit diagram of a second example of a coupling circuit in accordance with the present invention;

- **figure 4** shows a circuit diagram of a third example of a coupling circuit in accordance with the present invention.

In the aforesaid figures, equal or similar elements are indicated by the same reference numerals.

DETAILED DESCRIPTION OF THE PREFERRED EMBODIMENTS

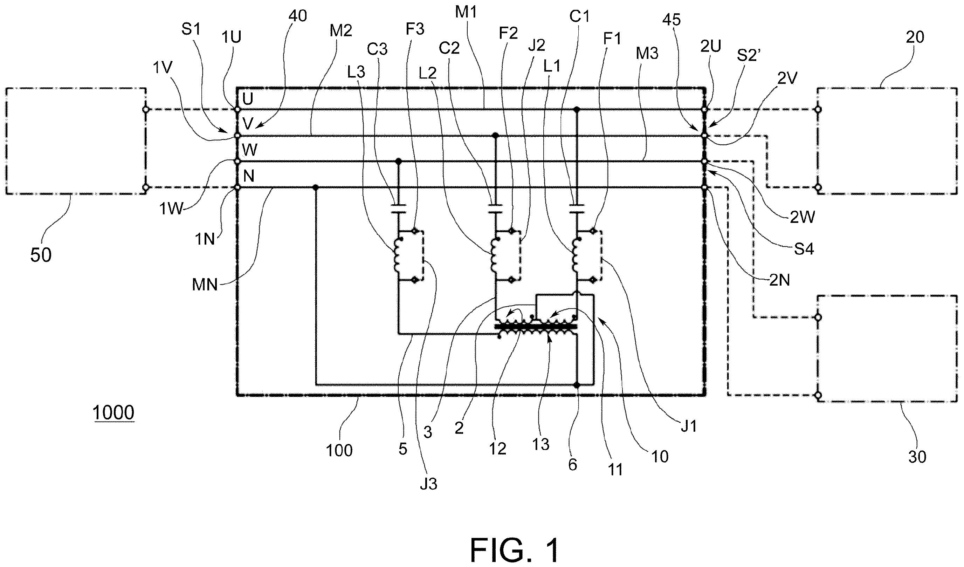

With reference to figures 1, 3 and 4, a coupling circuit in accordance with the invention for power line communications (or PLC) between electrical devices 50, 20, 30 connected to an electric network and in three different embodiments, is indicated as a whole by reference numerals 100, 700, 800.

It should be noted that the aforesaid electric network is a three-phase network having a first U, a second V and a third W phase line and one neutral line N. such a three-phase network is a power supply network with 3x400V low voltage phase lines plus the neutral line N and a frequency of 50 Hz.

In particular, the coupling circuit 100, 700, 800 comprises a first M1, a second M2 and a third M3 conductor, each connectable to one of the aforesaid electric phase lines U, V, W of the electric network, and a fourth conductor MN connectable to the neutral line N.

It should be noted that, with reference to the coupling circuit 800, the connection of the phases of the three-phase system to the conductors M1, M2, M3, MN of the circuit may be random and not strictly bound to the name of the conductor stated in the circuit diagram in the figures.

Furthermore, the coupling circuit 100, 700, 800 comprises at least one input port 1U-1N, 1V-1N, 1W-1N, 1U-1V, 1V-1W, 1W-1U proximal to an input portion 40 of coupling circuit formed by any two of the aforesaid first M1, second M2, third M3 and fourth MN conductors for receiving a differential input signal S1 to be transmitted on the three-phase electric network.

In an embodiment of the invention, for example in relation to the coupling circuit 100 in figure 1, such an input port configured to receive the differential input signal S1 coincides with the port formed by the first M1 and fourth MN conductors, i.e. the 1U-1N port. It should be noted, however, that such a differential input signal S1 may be applied, equally, between any two of the first M1, second M2, third M3 and fourth MN conductors while remaining within the scope of the present invention, as explained in greater detail below.

For example, such an input signal S1 is a sinusoidal signal having an amplitude A and a 100kHz frequency.

Furthermore, the coupling circuit 100, 700, 800 comprises a plurality of output ports 2U-2N, 2V-2N, 2W-2N, 2U-2V, 2V-2W, 2W-2U proximal to an output portion 45 of coupling circuit. Each output port is formed by any two of the above-mentioned first M1, second M2, third M3 e fourth MN conductors.

The coupling circuit 100, 700, 800 advantageously comprises a transformation circuit block or transformer 10, 70, 80 of the differential input signal S1 powered at the input port, for example 1U-1N, to provide differential output signals S2, S3, S4, S2', S3', S4' on each of the aforesaid output ports 2U-2N, 2V-2N, 2W-2N, 2U-2V, 2V-2W, 2W-2U of the plurality of output ports. Such a transformer 10, 70, 80 is interposed between the input portion 40 and the output portion 45 of the coupling circuit 100, 700, 800 and comprises several secondary windings magnetically coupled with one another. The transformer 10, 70, 80 comprises, in general:

- a first winding 11, 11a, 11b having a first terminal 1, 1a, 1b connected to a first conductor M1 through a first filtering circuit block C1, L1 and a respective second terminal 2, 2a, 2b;

  - a second winding 12, 12a, 12b having a third terminal 3, 3a, 3b connected to the second conductor M2 through a second filtering circuit block C2, L2 and a respective fourth terminal. The aforesaid fourth terminal is connected to the second terminal 2, 2a, 2b of the first winding 11, 11a, 11b;
  - a third winding 13, 13a, 13b having a fifth terminal 5, 5a, 5b connected to the third conductor M3 through a third filtering circuit block C3, L3 and a respective sixth terminal 6, 6a, 6b operatively connected to the fourth conductor MN. The second terminal 2, 2a, 2b of the first winding is operatively connected to the third conductor M3 or to the fourth conductor MN.

In greater detail, with reference to the transformer 10 of the coupling circuit 100 in figure 1, the sixth terminal 6 of the third winding 13 is directly connected to the fourth conductor MN and the second terminal 2 of the first winding 11 is directly connected to such a sixth terminal 6.

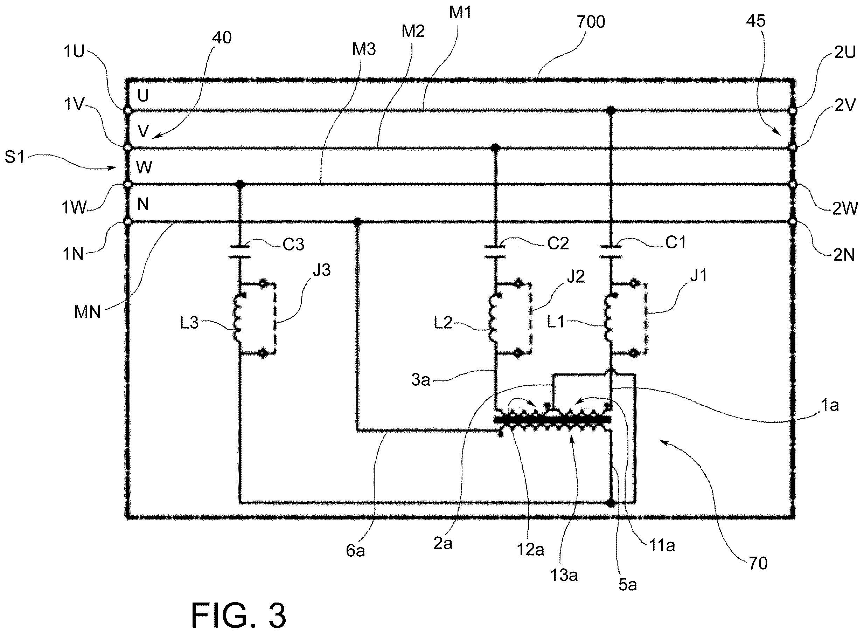

With reference to the transformer 70 of the coupling circuit 700 in figure 3, the sixth terminal 6a of the third winding 13a is directly connected to the fourth conductor MN and the second terminal 2a of the first winding 11a is directly connected to the fifth terminal 5a.

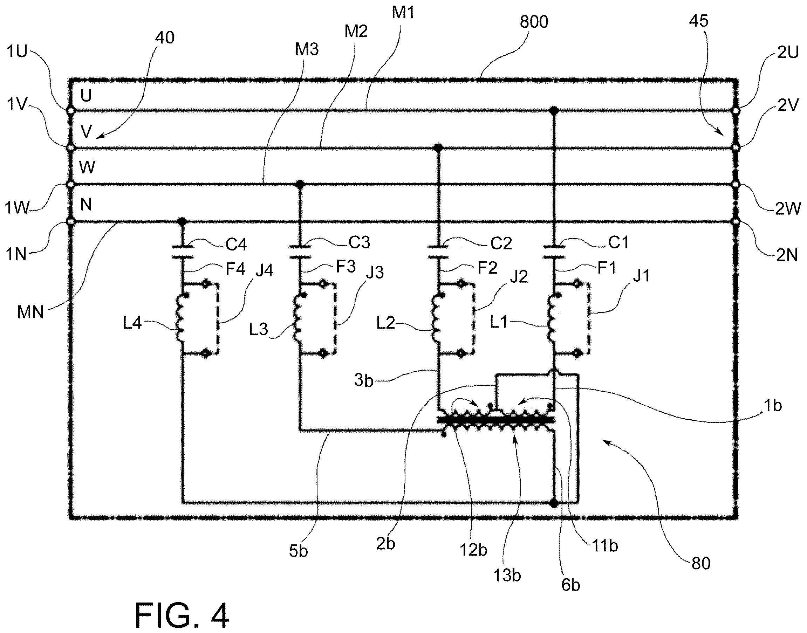

With reference to the transformer 80 of the coupling circuit 800 in figure 4, the sixth terminal 6b of the third winding 13b is connected to the fourth conductor MN through a fourth filtering circuit block C4, L4 and the second terminal 2b of the first winding 11b is directly connected to such a sixth terminal 6b.

In a preferred embodiment of the coupling circuit 100, 700, 800 of the invention, the third winding 13, 13a, 13b of the transformer 10, 70, 80 comprises a first number of turns N.

The above-mentioned first 11, 11a, 11b and second 12, 12a, 12b windings of the transformer 10, 70, 80 each comprise a second number of turns P=N/2, i.e. the first number of turns N is equal to twice the second number of turns P.

In accordance to a first embodiment, with reference to the coupler 100, 700, the first, the second and the third filtering circuit blocks comprise a first C1, a second C2 and a third C3 capacitor, respectively. Such filtering blocks, therefore, embody high-pass filters to filter coupling circuit input signals having a low frequency, among which also signals with a network frequency of 50 Hz.

With reference to the coupling circuit 800 in figure 4, the first, the second, the third and the fourth filtering circuit blocks comprise a first C1, a second C2, a third C3 and a fourth C4 capacitor, respectively, to form high-pass filters. By way of example, the first C1, second C2, third C3 and fourth C4 capacitors are equal to one another. By way of example, the values of the aforesaid first C1, second C2, third C3 and fourth C4 capacitors are:

$$C1 = C2 = C3 = C4 = 470 \text{ nF}$$

and ensure a filtering of input signals having a frequency lower than about 95 kHz.

In a second embodiment, with reference to the coupling circuit 100, 700, the first C1, L1, second C2, L2, and third C3, L3 filtering circuit blocks are bandpass filters. In particular:

- the first filtering circuit block comprises a first capacitor C1 connected in series to a first inductor L1 between the above-mentioned first conductor M1 and the first terminal 1, 1a of the first winding 11, 11a;
- the second filtering circuit block comprises a second capacitor C2 connected in series to a second inductor L2 between the above-mentioned second conductor M2 and the third terminal 3, 3a of the second winding 12, 12a;
- the third filtering circuit block comprises a third capacitor C3 connected in series to a third inductor L3 between the above-mentioned third conductor M3 and the fifth terminal 5, 5a of the third winding 13, 13a.

With reference to the coupling circuit 800 in figure 4, the first C1, L1, second C2, L2, third C3, L3 and fourth C4, L4 filtering circuit blocks are bandpass filters. In particular:

- the first filtering circuit block comprises a first capacitor C1 connected in series to a first inductor L1 between the first conductor M1 and the first terminal 1b;
- the second filtering circuit block comprises a second capacitor C2 connected in series to a second inductor L2 between the second conductor M2 and the third terminal 3b;
- the third filtering circuit block comprises a third capacitor C3 connected in series to a third inductor L3 between the third conductor M3 and the fifth terminal 5b;
- the fourth filtering circuit block comprises a fourth capacitor C4 connected in series to a fourth inductor L4 between the fourth conductor MN and the sixth terminal 6b.

In greater detail, with reference to the coupling circuit 800 in figure 4, the first capacitor C1 is connected between the first conductor M1 and a first node F1, the first inductor L1 is connected between such a first node F1 and the first terminal 1b. The second capacitor C2 is connected between the second conductor M2 and a second node F2, the second inductor L2 is connected between such a second node F2 and the third terminal 3b. The third capacitor C3 is connected between the third conductor M3 and a third node F3, the third inductor L3 is connected between such a third node F3 and the fifth terminal 5b. The fourth capacitor C4 is connected between the fourth conductor MN and a fourth node F4, the fourth inductor L4 is connected between such a fourth node F4 and the sixth terminal 6b.

Similar considerations also apply to the filtering circuit blocks of the coupling circuits 100, 700.

It should be noted that the first C1, second C2, third C3 and fourth C4 capacitors of the filtering blocks have, for example, the values reported above with reference to the first embodiment of the coupling circuit 100, 700, 800. By way of example, the first L1, second L2, third L3 and fourth L4 inductors are equal to one another. By way of example, the values of the aforesaid first L1, second L2, third L3 e fourth L4 inductors are:

$$L1 = L2 = L3 = L4 = 4.7 \text{ } \mu\text{H}$$

and ensure a filtering of the input signals for the coupling circuit 100, which signals have a frequency lower than about 95 kHz or greater than about 125 kHz. In other words, the coupling circuit 100, 700, 800 of the second embodiment is configured for power line operations according to the G3/PLC standard in the 95kHz - 125kHz frequency band, i.e. in accordance with the Cenelec B standard.

It should be noted that the provision of the fourth filtering circuit block C4, L4 in the coupling circuit 800 allows to extend the connection of the conductors M1, M2, M3, MN of the circuit 800 to the phase U, V, W and neutral N lines of the three-phase network. In other words, any of the conductors M1, M2, M3, MN may be connected to the neutral N line.

Again with reference to the coupling circuit 800 in figure 4, it should be noted that for each of the aforesaid first L1, second L2, third L3 and fourth L4 inductors, the coupling circuit 800 comprises a removable metal bridge or jumper J1, J2, J3, J4 (indicated in the figure by means of a dotted line) connected in parallel between the terminals of such an inductor to short-circuit it. As known to those skilled in the art, each jumper J1, J2, J3, J4 may be removed from the coupling circuit 800 to activate the respective inductor or may be re-inserted to disable it. By removing the aforesaid jumpers J1, J2, J3, J4, it is possible to modify the configuration of the coupling circuit 800, passing from the configuration of the first embodiment described above to the second one, and vice versa.

Similarly, the first L1, the second L2, and the third L3 inductors of the filtering blocks of the coupling circuits 100 and 700 each comprise a respective removable metal bridge or jumper J1, J2, J3.

With reference to figure 1, a system for the transmission/reception of power line signals on an three-phase electric network of the type described above, i.e. having a first U, a second V and a third W phase line and one neutral line N, is overall indicated with the reference numeral 1000.

Such a system 1000 comprises the coupling circuit 100 of the invention having the first M1, second M2 and third M3 conductors connected to the first U, the second V and a third W phase line of the electric network, respectively, and the fourth conductor MN connected to the neutral line N.

Although reference is specifically made to the example of coupling circuit 100 in figure 1, the following considerations are valid also in case the system 1000 equally employs one of the other couplers 700, 800 of the invention in figure 3 or 4.

The system 1000 further comprises an electric transmitter device 50 connected to one of the input ports 1U-1N, 1V-1N, 1W-1N, 1U-1V, 1V-1W, 1W-1U of the coupling circuit 100 formed by any two of the aforesaid first M1, second M2, third M3 and fourth MN conductors. Such a transmitter device 50, operating for example as a "master" power line communication device, is configured to provide the differential input signal S1 to be transmitted on the electric network to the coupling circuit 100.

In a preferred embodiment, the electric transmitter device 50 is a data concentrator module connected to the input port 1U-1N of the coupling circuit 100 formed by the first conductor M1 and the fourth conductor MN. Such a data concentrator module is of the standard type and will not be described in detail below.

In addition, the system 1000 comprises one or more electric receiver devices 20, 30 each connected to an output port 2U-2N, 2V-2N, 2W-2N, 2U-2V, 2V-2W, 2W-2U of the plurality of output ports of the coupling circuit 100 for receiving respective differential output signals S2, S3, S4, S2', S3', S4' obtained as a result of the transformation of the input signal S1.

As noted above, each output port of the coupling circuit 100 is formed by any two of the aforesaid first M1, second M2, third M3 and fourth MN conductors.

It should be noted that the electric receiver devices 20, 30 operate, for example, as "slave" power line communication devices.

With reference to the example of system 1000 in figure 1, the aforesaid one or more electric receiver devices comprise a first electric receiver device 20 connected to a first output port 2U-2V of the coupling circuit 100 formed by the first conductor M1 and the second conductor M2 to receive a first differential output signal S2'. In other words, the first receiver device 20 is connected between the first U and the second V phase line of the three-phase electric network.

Furthermore, the aforesaid one or more electric receiver devices comprise a second electric receiver device 30 connected to a second output port 2W-2N of the coupling circuit 100 formed by the third conductor M3 and the fourth conductor MN to receive a second differential output signal S4. In other words, the second receiver device 30 is connected between the third phase line W and the neutral line N of the three-phase electric network.

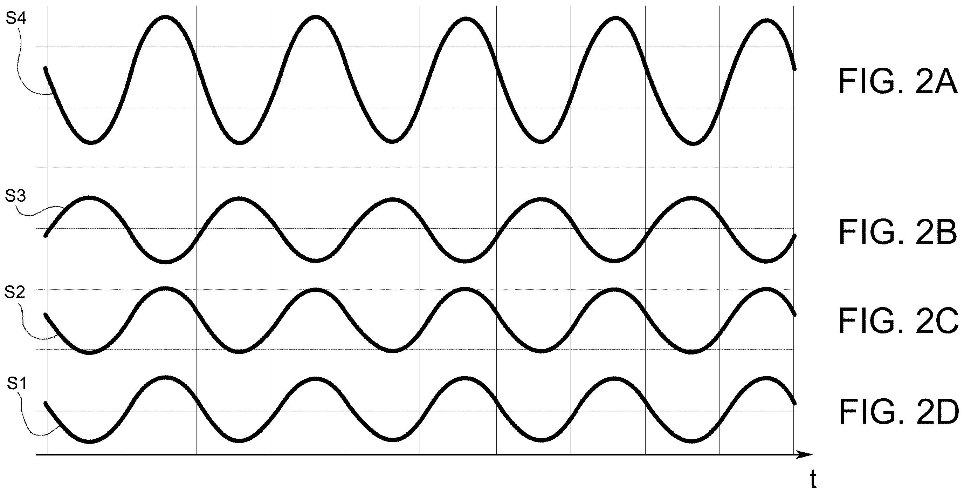

With reference to figures 2A-2D, concerning the power line communication process through the system 1000 of the invention, the electric transmitter device 50, connected to the input port 1U-1N of the coupling circuit 100, operates as a "master" by sending signals on the network to the electric receiver devices 20, 30 which operate as "slaves". In particular, when the transmitter device 50 queries one of the receiver devices, it provides the differential input signal S1, for example of amplitude A and phase equal to 0°, to the input port 1U-1N of the coupling circuit 100, to be transmitted on the electric network. Such an input signal S1 is shown, for example, in figure 2D.

The coupling circuit 100 is configured to transform such an input signal S1 to provide the following differential signals on the output ports, in particular:

- on port 2U-2N: signal S2 of amplitude A and phase equal to 0°. Such a signal S2 is shown, for example, in figure 2C;
- on port 2V-2N: signal S3 of amplitude A and phase equal to +180°. Such a signal S3 is shown, for example, in figure 2B;
- on port 2W-2N: signal S4 of amplitude equal to 2A and phase equal to 0°. Such a signal S4 is shown, for example, in figure 2A;
- on port 2U-2V: signal S2' of amplitude 2A and phase equal to 0°;
- on port 2V-2W: signal S3' of amplitude 3A and phase equal to +180°;
- on port 2W-2U: signal S4' of amplitude A and phase equal to +180°.

According to the foregoing, by injecting the differential input signal S1 of an amplitude A on the input port 1U-1N, such a signal is distributed and read out on any pair of conductors M1, M2, M3, MN being examined, i.e. it is possible to have a signal injection independent of the line features. Advantageously, the differential signals read out between any two network phase lines, as highlighted above, have an amplitude of 2U-2V=2A, 2V-2W=3A e 2W-2U=A, i.e. they have an appropriate amplitude for being employed in multiple applications.

In general, the transmitter device 50 may provide the differential input signal S1, for example of an amplitude A and phase equal to 0°, on any of the input ports 1U-1N, 1V-1N, 1W-1N, 1U-1V, 1V-1W, 1W-1U of the coupling circuit 100, i.e. six different connection configurations are provided.

The amplitude of the signals read out on the output ports 2U-2N, 2V-2N, 2W-2N, 2U-2V, 2V-2W, 2W-2U can be obtained according to the following Table 1.

**Table 1**

| | | READOUT SIGNAL | | | | | |
|---|---|---|---|---|---|---|---|
| | | 2U-2N | 2V-2N | 2W-2N | 2U-2V | 2V-2W | 2W-2U |
| TRANSMITTED SIGNAL | 1U-1N | A | A | 2A | 2A | 3A | A |
| | 1V-1N | A | A | 2A | 2A | 3A | A |
| | 1W-1N | 0.5A | 0.5A | A | A | 1.5A | 0.5A |
| | 1U-1V | 0.5A | 0.5A | A | A | 1.5A | 0.5A |
| | 1V-1W | 0.3A | 0.3A | 0.7A | 0.7A | A | 0.3A |
| | 1W-1U | A | A | 2A | 2A | 3A | A |

Starting from the coupling circuit 100 of the invention, the Applicant has verified that among the six connection possibilities, the one that provides the transmitter device 50 being connected to the input port 1U-1N (corresponding to the first row in Table 1) is the one that ensures better results in terms of appropriate amplitude of the readout signals between any two conductors M1, M2, M3, MN.

In other words, depending on how the differential input signal S1 is powered, an amplitude differential signal, variable depending on the transformation ratio employed, is always present between two other phases.

Those skilled in the art realize that in case the first receiver device 20 in figure 1 answers the query provided by the transmitter device 50, such a receiver device 20 will send a respective signal of an amplitude B=A on the output port 2U-2V, the transmitter device 50 will receive it with an amplitude equal to 0.5A.

The coupling circuit 100, 700, 800 for power line communications between electrical devices connected to a three-phase electric network and the related system 1000 have several advantages.

In particular, the coupling circuit 100, 700, 800 allows to power a power line signal, for example S1, on the 3x400V+N 50Hz three-phase line starting from a power line signal source injected between a phase and a neutral, being able to detect a differential signal of an appropriate amplitude between all phases. The circuit 100, 700, 800 allows, therefore, the communication of power line signals to receiver devices 20 connected between two phases in addition to receiver devices 30 connected between a phase and the neutral. In general, the coupling circuit 100, 700, 800 allows to put into mutual communication devices equally connected between phase and phase and between phase and neutral of the three-phase network.

Such an arrangement is advantageous for power line communications in the railway field, in which electrical devices are required to communicate with one another by power line communication, both whether these devices are powered between phase and neutral and between phase and phase. For example, the first electric receiver device 20 is constituted by a heating element or heating cable of railway switches.

In order to satisfy contingent needs, those skilled in the art may modify and adapt the embodiments of the coupling circuit for power line communications of the invention, and replace elements with others which are functionally equivalent, without departing from the scope of the following claims. Each of the features described as belonging to a possible embodiment may be achieved irrespective of the other embodiments described.

**Claims**

1. Coupling circuit (100; 700; 800) for power line communications between electrical devices (50, 20, 30) connected to an electric network having a first (U), a second (V) and a third (W) phase line and a neutral line (N), comprising:

   - a first (M1), a second (M2) and a third (M3) conductor each connectable to one of aforesaid electric phase lines (U, V, W) of the electric network and a fourth conductor (MN) connectable to the neutral line (N);
   - at least one input port (1U-1N, 1N-1V, 1W-1N, 1U-1V, 1V-1W, 1W-1U) proximal to an input portion (40) of coupling circuit formed by any two of said first (M1), second (M2), third (M3) and fourth (MN) conductor for receiving a differential input signal (S1) to be transmitted on the electric network;
   - a plurality of output ports (2U-2N, 2N-2V, 2W-2N, 2U-2V, 2V-2W, 2W-2U) proximal to an output portion (45) of the coupling circuit, each output port being formed by any two of said first (M1), second (M2), third (M3) and fourth (MN) conductor;
   - a transformation circuit block (10; 70; 80) of the differential input signal (S1) to make available differential output signals (S2, S3, S4, S2', S3', S4') on each of said output ports (2U-2N, 2N-2V, 2W-2N, 2U-2V, 2V-2W, 2W-2U) of the plurality of output ports, said transformation circuit block (10; 70; 80) being interposed between the input portion (40) and the output portion (45) of the coupling circuit and comprising:

     - a first winding (11; 11a; 11b) having a first terminal (1; 1a; 1b) connected to the first conductor (M1) through a first circuit filtering block (C1, L1) and a second terminal (2; 2a; 2b);
     - a second winding (12; 12a; 12b) having a third terminal (3; 3a; 3b) connected to the second conductor (M2) through a second filtering circuit block (C2, L2) and a fourth terminal, wherein said fourth terminal is connected to the second terminal of the first winding;
     - a third winding (13; 13a; 13b) having a fifth terminal (5; 5a; 5b) connected to the third conductor (M3) through a third filtering circuit block (C3, L3) and a sixth terminal (6; 6a; 6b) operatively connected to the fourth conductor (MN), wherein the second terminal (2; 2a; 2b) of the first winding is operatively connected to the third conductor (M3) or to the fourth conductor (MN).

2. Coupling circuit (100) according to claim 1, wherein the sixth terminal (6) of the third winding (13) is directly connected to the fourth conductor (MN) and the second terminal (2) of the first winding (11) is directly connected to the sixth terminal.

3. Coupling circuit (700) according to claim 1, wherein the sixth terminal (6a) of the third winding (13a) is directly connected to the fourth conductor (MN) and the second terminal (2a) of the first winding (11a) is directly connected to the fifth terminal (5a).

4. Coupling circuit (800) according to claim 1, wherein the sixth terminal (6b) of the third winding (13b) is connected to the fourth conductor (MN) through a fourth filtering circuit block (C4, L4) and the second terminal (2b) of the first winding (11b) is directly connected to the sixth terminal.

5. Coupling circuit (100; 700; 800) according to claim 1, wherein said input port (1U-1N) of coupling circuit for receiving the differential input signal (S1) to be transmitted on the electric network is formed by the first conductor (M1) and the fourth conductor (MN).

6. Coupling circuit (100; 700; 800) according to claim 1, wherein said third winding (13; 13a; 13b) of the transformation circuit block (10; 70; 80) comprises a first number of turns (N) and said first (11; 11a; 11b) and second (12; 12a; 12b) winding of the transformation circuit block each comprise a second number of turns (P), said first number of turns being twice the second number of turns.

7. Coupling circuit (100; 700) according to claim 1, wherein said first, second and third filtering circuit block comprise a first (C1), a second (C2) and a third (C3) capacitor, respectively, to form high-pass filters.

8. Coupling circuit (800) according to claim 4, wherein said first, second, third and fourth filtering circuit block comprise a first (C1), a second (C2), a third (C3) and a fourth (C4) capacitor, respectively, to form high-pass filters.

9. Coupling circuit (100; 700) according to claim 1, wherein said first, second and third filtering circuit block are bandpass filters wherein:

- the first filtering circuit block comprises a first capacitor (C1) connected in series to a first inductor (L1) between said first conductor (M1) and first terminal (1; 1a);
- the second filtering circuit block comprises a second capacitor (C2) connected in series to a second inductor (L2) between said second conductor (M2) and third terminal (3; 3a);
- the third filtering circuit block comprises a third capacitor (C3) connected in series to a third inductor (L3) between said third conductor (M3) and fifth terminal (5; 5a).

10. Coupling circuit (800) according to claim 4, wherein said first, second, third and fourth filtering circuit block are bandpass filters wherein:

- the first filtering circuit block comprises a first capacitor (C1) connected in series to a first inductor (L1) between said first conductor (M1) and first terminal (1b);
- the second filtering circuit block comprises a second capacitor (C2) connected in series to a second inductor (L2) between said second conductor (M2) and third terminal (3b);
- the third filtering circuit block comprises a third capacitor (C3) connected in series to a third inductor (L3) between said third conductor (M3) and fifth terminal (5b);
- the fourth filtering circuit block comprises a fourth capacitor (C4) connected in series to a fourth inductor (L4) between said fourth conductor (MN) and sixth terminal (6b).

11. System (1000) for the transmission and reception of power line communication signals through an electric network having a first (U), a second (V) and a third (W) phase line and a neutral line (N), comprising:

- a coupling circuit (100; 700; 800) according to at least one of claims 1 to 10, having a first (M1), a second (M2) and a third (M3) conductor each connected to one of the aforesaid electric phase lines (U, V, W) of the electric network and a fourth conductor (MN) connected to the neutral line (N);
- an electric transmitter device (50) connected to an input port (1U-1N, 1V-1N, 1W-1N, 1U-1V, 1V-1W, 1W-1U) of the coupling circuit (100; 700; 800) formed by any two of said first (M1), second (M2), third (M3) and fourth (MN) conductor for providing a differential input signal (S1) to be transmitted on the electric network;
- one or more electric receiver devices (20, 30) each connected to an output port (2U-2N, 2V-2N, 2W-2N, 2U-2V, 2V-2W, 2W-2U) of a plurality of output ports of the coupling circuit (100; 700; 800), each output port being formed by any two of said first (M1), second (M2), third (M3) and fourth (MN) conductor, for receiving differential output signals (S2, S3, S4, S2', S3', S4') obtained by the transformation of the differential input signal (S1) performed by the coupling circuit.

12. System (1000) for the transmission and reception of power line signals according to claim 11, wherein said electric transmitter device (50) is a data concentrator module connected to the input port (1U-1N) of the coupling circuit (100; 700; 800) formed by the first conductor (M1) and the fourth conductor (MN).

13. System (1000) for the transmission and reception of power line signals according to claim 11, wherein said one or more electric receiver devices comprise a first electric receiver device (20) connected to a first output port (2U-2V) of the coupling circuit (100) formed by the first conductor (M1) and the second conductor (M2) to receive a first differential output signal (S2').

14. System (1000) for the transmission and reception of power line signals according to claim 11, wherein said one or more electric receiver devices comprise a second electric receiver device (30) connected to a second output port (2W-2N) of the coupling circuit (100; 700; 800) formed by the third conductor (M3) and the fourth conductor (MN) to receive a second differential output signal (S4).

15. System (1000) for the transmission and reception of power line communication signals according to claim 13, wherein said first electric receiver device (20) is constituted by a heating element or heating cable of railway switches.


**Patentansprüche**

1. Kopplungsschaltung (100; 700; 800) für Netzleitungskommunikation zwischen elektrischen Vorrichtungen (50, 20, 30), die mit einem elektrischen Netzwerk verbunden sind, das eine erste (U), eine zweite (V) und eine dritte (W) Phasenleitung und eine neutrale Leitung (N) aufweist, wobei die Kopplungsschaltung folgende Merkmale aufweist:

einen ersten (M1), einen zweiten (M2) und einen dritten (M3) Leiter, die jeweils mit einer der vorgenannten elektrischen Phasenleitungen (U, V, W) des elektrischen Netzwerks verbindbar sind, und einen vierten Leiter (MN), der mit der neutralen Leitung (N) verbindbar ist;

zumindest einen Eingangsport (1U-1N, 1N-1V, 1W-1N, 1U-1V, 1V-1W, 1W-1U) in der Nähe eines Eingangsabschnitts (40) der Kopplungsschaltung, der durch zwei des ersten (M1), zweiten (M2), dritten (M3) und vierten (MN) Leiters gebildet ist, um ein Differenzeingangssignal (S1) zu empfangen, das über das elektrische Netzwerk übertragen werden soll;

eine Mehrzahl von Ausgangsports (2U-2N, 2N-2V, 2W-2N, 2U-2V, 2V-2W, 2W-2U) in der Nähe eines Ausgangsabschnitts (45) der Kopplungsschaltung, wobei jeder Ausgangsport durch zwei des ersten (M1), zweiten (M2), dritten (M3) und vierten (MN) Leiters gebildet ist;

einen Transformationsschaltungsblock (10; 70; 80) des Differenzeingangssignals (S1), um Differenzausgangssignale (S2, S3, S4, S2', S3', S4') an jedem der Ausgangsports (2U-2N, 2N-2V, 2W-2N, 2U-2V, 2V-2W, 2W-2U) der Mehrzahl von Ausgangsports verfügbar zu machen, wobei der Transformationsschaltungsblock (10; 70; 80) zwischen dem Eingangsabschnitt (40) und dem Ausgangsabschnitt (45) der Kopplungsschaltung angeordnet ist und folgende Merkmale aufweist:

eine erste Wicklung (11; 11a; 11b), die einen ersten Anschluss (1; 1a; 1b), der mit dem ersten Leiter (M1) durch einen ersten Schaltungsfilterblock (C1, L1) verbunden ist, und einen zweiten Anschluss (2; 2a; 2b) aufweist;

eine zweite Wicklung (12; 12a; 12b), die einen dritten Anschluss (3; 3a; 3b), der mit dem zweiten Leiter (M2) durch einen zweiten Filterschaltungsblock (C2, L2) verbunden ist, und einen vierten Anschluss aufweist, wobei der vierte Anschluss mit dem zweiten Anschluss der ersten Wicklung verbunden ist;

eine dritte Wicklung (13; 13a; 13b), die einen fünften Anschluss (5; 5a; 5b), der mit dem dritten Leiter (M3) durch einen dritten Filterschaltungsblock (C3, L3) verbunden ist, und einen sechsten Anschluss (6; 6a; 6b) aufweist, der mit dem vierten Leiter (MN) wirksam verbunden ist, wobei der zweite Anschluss (2; 2a; 2b) der ersten Wicklung wirksam mit dem dritten Leiter (M3) oder mit dem vierten Leiter (MN) verbunden ist.

2.  Kopplungsschaltung (100) gemäß Anspruch 1, wobei der sechste Anschluss (6) der dritten Wicklung (13) direkt mit dem vierten Leiter (MN) verbunden ist und der zweite Anschluss (2) der ersten Wicklung (11) direkt mit dem sechsten Anschluss verbunden ist.

3.  Kopplungsschaltung (700) gemäß Anspruch 1, wobei der sechste Anschluss (6a) der dritten Wicklung (13a) direkt mit dem vierten Leiter (MN) verbunden ist und der zweite Anschluss (2a) der ersten Wicklung (11a) direkt mit dem fünften Anschluss (5a) verbunden ist.

4.  Kopplungsschaltung (800) gemäß Anspruch 1, wobei der sechste Anschluss (6b) der dritten Wicklung (13b) mit dem vierten Leiter (MN) durch einen vierten Filterschaltungsblock (C4, L4) verbunden ist und der zweite Anschluss (2b) der ersten Wicklung (11b) direkt mit dem sechsten Anschluss verbunden ist.

5.  Kopplungsschaltung (100; 700; 800) gemäß Anspruch 1, wobei der Eingangsport (1U-1N) der Kopplungsschaltung zum Empfangen des Differenzeingangssignals (S1), das über das elektrische Netzwerk übertragen werden soll, durch den ersten Leiter (M1) und den vierten Leiter (MN) gebildet ist.

6.  Kopplungsschaltung (100; 700; 800) gemäß Anspruch 1, wobei die dritte Wicklung (13; 13a; 13b) des Transformationsschaltungsblocks (10; 70; 80) eine erste Anzahl von Windungen (N) aufweist und die erste (11; 11a; 11b) und zweite (12; 12a; 12b) Wicklung des Transformationsschaltungsblocks jeweils eine zweite Anzahl von Windungen (P) aufweisen, wobei die erste Anzahl von Windungen doppelt so groß ist wie die zweite Anzahl von Windungen.

7.  Kopplungsschaltung (100; 700) gemäß Anspruch 1, wobei der erste, zweite und dritte Filterschaltungsblock einen ersten (C1), einen zweiten (C2) beziehungsweise einen dritten (C3) Kondensator aufweisen, um Hochpassfilter zu bilden.

8.  Kopplungsschaltung (800) gemäß Anspruch 4, wobei der erste, zweite, dritte und vierte Filterschaltungsblock einen ersten (C1), einen zweiten (C2), einen dritten (C3) beziehungsweise einen vierten (C4) Kondensator aufweisen, um Hochpassfilter zu bilden.

9.  Kopplungsschaltung (100; 700) gemäß Anspruch 1, wobei der erste, zweite und dritte Filterschaltungsblock Bandpassfilter sind, wobei:

der erste Filterschaltungsblock einen ersten Kondensator (C1) aufweist, der mit einem ersten Induktor (L1) zwischen dem ersten Leiter (M1) und dem ersten Anschluss (1; 1a) in Reihe geschaltet ist;

der zweite Filterschaltungsblock einen zweiten Kondensator (C2) aufweist, der mit einem zweiten Induktor (L2) zwischen dem zweiten Leiter (M2) und dem dritten Anschluss (3; 3a) in Reihe geschaltet ist;

der dritte Filterschaltungsblock einen dritten Kondensator (C3) aufweist, der mit einem dritten Induktor (L3) zwischen dem dritten Leiter (M3) und dem fünften Anschluss (5; 5a) in Reihe geschaltet ist.

10. Kopplungsschaltung (800) gemäß Anspruch 4, wobei der erste, zweite, dritte und vierte Filterschaltungsblock Bandpassfilter sind, wobei:

der erste Filterschaltungsblock einen ersten Kondensator (C1) aufweist, der mit einem ersten Induktor (L1) zwischen dem ersten Leiter (M1) und dem ersten Anschluss (1b) in Reihe geschaltet ist;

der zweite Filterschaltungsblock einen zweiten Kondensator (C2) aufweist, der mit einem zweiten Induktor (L2) zwischen dem zweiten Leiter (M2) und dem dritten Anschluss (3b) in Reihe geschaltet ist;

der dritte Filterschaltungsblock einen dritten Kondensator (C3) aufweist, der mit einem dritten Induktor (L3) zwischen dem dritten Leiter (M3) und dem fünften Anschluss (5b) in Reihe geschaltet ist;

der vierte Filterschaltungsblock einen vierten Kondensator (C4) aufweist, der mit einem vierten Induktor (L4) zwischen dem vierten Leiter (MN) und dem sechsten Anschluss (6b) in Reihe geschaltet ist.

11. System (1000) für das Senden und Empfangen von Netzleitungskommunikationssignalen über ein elektrisches Netzwerk, das eine erste (U), eine zweite (V) und eine dritte (W) Phasenleitung und eine neutrale Leitung (N) aufweist, wobei das System folgende Merkmale aufweist:

eine Kopplungsschaltung (100; 700; 800) gemäß zumindest einem der Ansprüche 1 bis 10, die einen ersten (M1), einen zweiten (M2) und einen dritten (M3) Leiter, die jeweils mit einer der vorgenannten elektrischen Phasenleitungen (U, V, W) des elektrischen Netzwerks verbunden sind, und einen vierten Leiter (MN) aufweist, der mit der neutralen Leitung (N) verbunden ist;

eine elektrische Sendevorrichtung (50), die mit einem Eingangsport (1U-1N, 1V-1N, 1W-1N, 1U-1V, 1V-1W, 1W-1U) der Kopplungsschaltung (100; 700; 800) verbunden ist, der durch zwei des ersten (M1), zweiten (M2), dritten (M3) und vierten (MN) Leiters gebildet ist, um ein Differenzeingangssignal (S1) bereitzustellen, das über das elektrische Netzwerk übertragen werden soll;

eine oder mehrere elektrische Empfangsvorrichtungen (20, 30), die jeweils mit einem Ausgangsport (2U-2N, 2V-2N, 2W-2N, 2U-2V, 2V-2W, 2W-2U) einer Mehrzahl von Ausgangsports der Kopplungsschaltung (100; 700; 800) verbunden sind, wobei jeder Ausgangsport durch zwei des ersten (M1), zweiten (M2), dritten (M3) und vierten (MN) Leiters gebildet ist, zum Empfangen von Differenzausgangssignalen (S2, S3, S4, S2', S3', S4'), die durch die Transformation des Differenzeingangssignals (S1) erhalten werden, die seitens der Kopplungsschaltung durchgeführt wird.

12. System (1000) für das Senden und Empfangen von Netzleitungssignalen gemäß Anspruch 11, wobei die elektrische Sendevorrichtung (50) ein Datenkonzentratormodul ist, das mit dem Eingangsport (1U-1N) der Kopplungsschaltung (100; 700; 800) verbunden ist, der durch den ersten Leiter (M1) und den vierten Leiter (MN) gebildet ist.

13. System (1000) für das Senden und Empfangen von Netzleitungssignalen gemäß Anspruch 11, wobei die eine oder die mehreren elektrischen Empfangsvorrichtungen eine erste elektrische Empfangsvorrichtung (20) aufweisen, die mit einem ersten Ausgangsport (2U-2V) der Kopplungsschaltung (100) verbunden ist, der durch den ersten Leiter (M1) und den zweiten Leiter (M2) gebildet ist, um ein erstes Differenzausgangssignal (S2') zu empfangen.

14. System (1000) für das Senden und Empfangen von Netzleitungssignalen gemäß Anspruch 11, wobei die eine oder die mehreren elektrischen Empfangsvorrichtungen eine zweite elektrische Empfangsvorrichtung (30) aufweisen, die mit einem zweiten Ausgangsport (2W-2N) der Kopplungsschaltung (100; 700; 800) verbunden ist, der durch den dritten Leiter (M3) und den vierten Leiter (MN) gebildet ist, um ein zweites Differenzausgangssignal (S4) zu empfangen.

15. System (1000) für das Senden und Empfangen von Netzleitungskommunikationssignalen gemäß Anspruch 13, wobei die erste elektrische Empfangsvorrichtung (20) aus einem Heizelement oder Heizkabel von Weichen besteht.

**Revendications**

1. Circuit de couplage (100 ; 700 ; 800) pour des communications de ligne de puissance entre des dispositifs électriques (50, 20, 30) connectés à un réseau électrique ayant une première (U), une deuxième (V) et une troisième (W) ligne de phase et une ligne neutre (N), comprenant :

   - un premier (M1), un deuxième (M2) et un troisième (M3) conducteur pouvant chacun être connecté à l'une des lignes électriques de phase susmentionnées (U, V, W) du réseau électrique et un quatrième conducteur (MN) pouvant être connecté à la ligne neutre (N) ;
   - au moins un port d'entrée (1U-1 N, 1N-1V, 1W-1N, 1U-1V, 1V-1W, 1W-1U) à proximité d'une partie d'entrée (40) du circuit de couplage formé par deux quelconques desdits premier (M1), deuxième (M2), troisième (M3) et quatrième (MN) conducteur pour recevoir un signal d'entrée différentiel (S1) devant être transmis sur le réseau électrique ;
   - une pluralité de ports de sortie (2U-2N, 2N-2V, 2W-2N, 2U-2V, 2V-2W, 2W-2U) à proximité d'une portion de sortie (45) du circuit de couplage, chaque port de sortie étant formé par deux quelconques desdits premier (M1), deuxième (M2), troisième (M3) et quatrième (MN) conducteur ;
   - un bloc de circuit de transformation (10 ; 70 ; 80) du signal d'entrée différentiel (S1) pour obtenir des signaux de sortie différentiels disponibles (S2, S3, S4, S2', S3', S4') sur chacun desdits ports de sortie (2U-2N, 2N-2V, 2W-2N, 2U-2V, 2V-2W, 2W-2U) de la pluralité de ports de sortie, ledit bloc de circuit de transformation (10 ; 70 ; 80) étant interposé entre la partie d'entrée (40) et la partie de sortie (45) du circuit de couplage et comprenant :
   - un premier enroulement (11 ; 11a; 11b) ayant une première borne (1 ; 1a ; 1b) connectée au premier conducteur (M1) par l'intermédiaire d'un premier bloc de filtrage de circuit (C1, L1) et une deuxième borne (2 ; 2a ; 2b) ;
   - un deuxième enroulement (12 ; 12a ; 12b) ayant une troisième borne (3 ; 3a ; 3b) connectée au deuxième conducteur (M2) par l'intermédiaire d'un deuxième bloc de circuit de filtrage (C2, L2) et une quatrième borne, dans lequel ladite quatrième borne est connectée à la deuxième borne du premier enroulement ;
   - un troisième enroulement (13 ; 13a ; 13b) ayant une cinquième borne (5 ; 5a ; 5b) connectée au troisième conducteur (M3) par l'intermédiaire d'un troisième bloc de circuit de filtrage (C3, L3) et une sixième borne (6 ; 6a ; 6b) connectée de manière fonctionnelle au quatrième conducteur (MN), dans lequel la deuxième borne (2 ; 2a ; 2b) du premier enroulement est connectée de manière fonctionnelle au troisième conducteur (M3) ou au quatrième conducteur (MN).

2. Circuit de couplage (100) selon la revendication 1, dans lequel la sixième borne (6) du troisième enroulement (13) est directement connectée au quatrième conducteur (MN) et la deuxième borne (2) du premier enroulement (11) est directement connectée à la sixième borne.

3. Circuit de couplage (700) selon la revendication 1, dans lequel la sixième borne (6a) du troisième enroulement (13a) est directement connectée au quatrième conducteur (MN) et la deuxième borne (2a) du premier enroulement (11a) est directement connectée à la cinquième borne (5a).

4. Circuit de couplage (800) selon la revendication 1, dans lequel la sixième borne (6b) du troisième enroulement (13b) est connectée au quatrième conducteur (MN) par l'intermédiaire d'un quatrième bloc de circuit de filtrage (C4, L4) et la deuxième borne (2b) du premier enroulement (11b) est directement connectée à la sixième borne.

5. Circuit de couplage (100 ; 700 ; 800) selon la revendication 1, dans lequel ledit port d'entrée (1U-1N) du circuit de couplage pour recevoir le signal d'entrée différentiel (S1) devant être transmis sur le réseau électrique est formé par le premier conducteur (M1) et le quatrième conducteur (MN).

6. Circuit de couplage (100 ; 700 ; 800) selon la revendication 1, dans lequel ledit troisième enroulement (13 ; 13a ; 13b) du bloc de circuit de transformation (10 ; 70 ; 80) comprend un premier nombre de tours (N) et lesdits premier (11 ; 11a; 11b) et deuxième (12 ; 12a ; 12b) enroulement du bloc de circuit de transformation comprennent chacun un deuxième nombre de tours (P), ledit premier nombre de tours étant le double du deuxième nombre de tours.

7. Circuit de couplage (100 ; 700) selon la revendication 1, dans lequel lesdits premier, deuxième et troisième bloc de circuit de filtrage comprennent un premier (C1), un deuxième (C2) et un troisième (C3) condensateur, respectivement, pour former des filtres passe-haut.

8. Circuit de couplage (800) selon la revendication 4, dans lequel lesdits premier, deuxième, troisième et quatrième bloc de circuit de filtrage comprennent un premier (C1), un deuxième (C2), un troisième (C3) et un quatrième (C4) condensateur, respectivement, pour former des filtres passe-haut.

9. Circuit de couplage (100 ; 700) selon la revendication 1, dans lequel lesdits premier, deuxième et troisième bloc de circuit de filtrage sont des filtres passe-bande dans lequel :

- le premier bloc de circuit de filtrage comprend un premier condensateur (C1) connecté en série à une première inductance (L1) entre lesdits premier conducteur (M1) et première borne (1 ; 1a) ;
- le deuxième bloc de circuit de filtrage comprend un deuxième condensateur (C2) connecté en série à une deuxième inductance (L2) entre lesdits deuxième conducteur (M2) et troisième borne (3 ; 3a) ;
- le troisième bloc de circuit de filtrage comprend un troisième condensateur (C3) connecté en série à une troisième inductance (L3) entre lesdits troisième conducteur (M3) et cinquième borne (5 ; 5a).

10. Circuit de couplage (800) selon la revendication 4, dans lequel lesdits premier, deuxième, troisième et quatrième bloc de circuit de filtrage sont des filtres passe-bande dans lequel :

- le premier bloc de circuit de filtrage comprend un premier condensateur (C1) connecté en série à une première inductance (L1) entre lesdits premier conducteur (M1) et première borne (1b) ;
- le deuxième bloc de circuit de filtrage comprend un deuxième condensateur (C2) connecté en série à une deuxième inductance (L2) entre lesdits deuxième conducteur (M2) et troisième borne (3b) ;
- le troisième bloc de circuit de filtrage comprend un troisième condensateur (C3) connecté en série à une troisième inductance (L3) entre lesdits troisième conducteur (M3) et cinquième borne (5b) ;
- le quatrième bloc de circuit de filtrage comprend un quatrième condensateur (C4) connecté en série à une quatrième inductance (L4) entre lesdits quatrième conducteur (MN) et sixième borne (6b).

11. Système (1000) pour la transmission et la réception de signaux de communication de ligne de puissance par l'intermédiaire d'un réseau électrique ayant une première (U), une deuxième (V) et une troisième (W) ligne de phase et une ligne neutre (N), comprenant :

- un circuit de couplage (100 ; 700 ; 800) selon au moins l'une des revendications 1 à 10, ayant un premier (M1), un deuxième (M2) et un troisième (M3) conducteur chacun connecté à l'une des lignes électriques de phase susmentionnées (U, V, W) du réseau électrique et un quatrième conducteur (MN) connecté à la ligne neutre (N) ;
- un dispositif émetteur électrique (50) connecté à un port d'entrée (1U-1N, 1V-1N, 1W-1N, 1U-1V, 1V-1W, 1W-1U) du circuit de couplage (100 ; 700 ; 800) formé par deux quelconques desdits premier (M1), deuxième (M2), troisième (M3) et quatrième (MN) conducteur pour fournir un signal d'entrée différentiel (S1) devant être transmis sur le réseau électrique ;
- un ou plusieurs dispositifs récepteurs électriques (20, 30) chacun connecté à un port de sortie (2U-2N, 2V-2N, 2W-2N, 2U-2V, 2V-2W, 2W-2U) d'une pluralité de ports de sortie du circuit de couplage (100 ; 700 ; 800), chaque port de sortie étant formé par deux quelconques desdits premier (M1), deuxième (M2), troisième (M3) et quatrième (MN) conducteur, pour recevoir des signaux de sortie différentiels (S2, S3, S4, S2', S3', S4') obtenus par la transformation du signal d'entrée différentiel (S1) réalisée par le circuit de couplage.

12. Système (1000) pour la transmission et la réception de signaux de ligne de puissance selon la revendication 11, dans lequel ledit dispositif émetteur électrique (50) est un module concentrateur de données connecté au port d'entrée (1U-1N) du circuit de couplage (100 ; 700 ; 800) formé par le premier conducteur (M1) et le quatrième conducteur (MN).

13. Système (1000) pour la transmission et la réception de signaux de ligne de puissance selon la revendication 11, dans lequel lesdits un ou plusieurs dispositifs récepteurs électriques comprennent un premier dispositif récepteur électrique (20) connecté à un premier port de sortie (2U-2V) du circuit de couplage (100) formé par le premier conducteur (M1) et le deuxième conducteur (M2) pour recevoir un premier signal de sortie différentiel (S2').

14. Système (1000) pour la transmission et la réception de signaux de ligne de puissance selon la revendication 11, dans lequel lesdits un ou plusieurs dispositifs récepteurs électriques comprennent un deuxième dispositif récepteur électrique (30) connecté à un deuxième port de sortie (2W-2N) du circuit de couplage (100 ; 700 ; 800) formé par le troisième conducteur (M3) et le quatrième conducteur (MN) pour recevoir un deuxième signal de sortie différentiel (S4).

15. Système (1000) pour la transmission et la réception de signaux de communication de ligne de puissance selon la revendication 13, dans lequel ledit premier dispositif récepteur électrique (20) est constitué d'un élément chauffant ou d'un câble chauffant d'aiguillage de chemin de fer.

FIG. 1

FIG. 2A

FIG. 2B

FIG. 2C

FIG. 2D

FIG. 3

EP 3 280 058 B1

FIG. 4

**REFERENCES CITED IN THE DESCRIPTION**

**Patent documents cited in the description**

- US 4473817 A